(19) **Europäisches Patentamt / European Patent Office / Office européen des brevets**

(11) **EP 2 257 966 B1**

(12) **EUROPÄISCHE PATENTSCHRIFT**

(45) Veröffentlichungstag und Bekanntmachung des Hinweises auf die Patenterteilung:
**02.11.2011  Patentblatt 2011/44**

(21) Anmeldenummer: **08735646.5**

(22) Anmeldetag: **01.04.2008**

(51) Int Cl.:
*H01J 61/86* (2006.01)     *H01J 61/073* (2006.01)
*G03B 21/14* (2006.01)

(86) Internationale Anmeldenummer:
**PCT/EP2008/053873**

(87) Internationale Veröffentlichungsnummer:
**WO 2009/121400 (08.10.2009 Gazette 2009/41)**

(54) **VERFAHREN ZUM BEREITSTELLEN EINER HOCHDRUCKENTLADUNGSLAMPE, VERFAHREN ZUM BEREITSTELLEN VON LICHT MITTELS EINER HOCHDRUCKENTLADUNGSLAMPE SOWIE DIGITALER VIDEOPROJEKTOR**

METHOD FOR PRODUCING A HIGH-PRESSURE DISCHARGE LAMP, METHOD FOR PRODUCING LIGHT USING A HIGH-PRESSURE DISCHARGE LAMP AND DIGITAL VIDEO PROJECTOR

PROCÉDÉ POUR PRODUIRE UNE LAMPE À DÉCHARGE HAUTE PRESSION, PROCÉDÉ POUR PRODUIRE DE LA LUMIÈRE AU MOYEN D'UNE LAMPE À DÉCHARGE HAUTE PRESSION ET VIDÉOPROJECTEUR NUMÉRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**08.12.2010  Patentblatt 2010/49**

(73) Patentinhaber: **Osram AG**
**81543 München (DE)**

(72) Erfinder:
• **BAACKE, Swen-Uwe**
  **86633 Neuburg/Donau (DE)**
• **LÖFFLER, Gerhard**
  **85072 Eichstätt (DE)**
• **ROSENTHAL, Dirk**
  **85080 Gaimersheim (DE)**
• **SEITZ, Wolfgang**
  **85072 Eichstätt (DE)**

(56) Entgegenhaltungen:
**EP-A- 1 217 644        DE-A1- 4 229 317**
**DE-A1- 10 209 426     JP-A- 1 050 358**
**US-A1- 2003 001 503**

EP 2 257 966 B1

**Beschreibung**

**Technisches Gebiet**

Die Erfindung betrifft ein Verfahren zum Bereitstellen einer Hochdruckentladungslampe. Im Zentrum des Interesses steht hierbei insbesondere ein Verfahren zum Bereitstellen von Licht mittels einer so bereitgestellten Hochdruckentladungslampe, wobei Hauptanwendungsgebiet hierfür ein digitaler Videoprojektor ist.

In konventionellen Projektoren wird Licht auf eine große Fläche, beispielsweise ein Diapositiv, gesandt. Jede Teilfläche dieser großen Fläche entspricht einem Teil des projizierten Bildes.

In digitalen Projektoren werden die einzelnen Bilder bildpunktweise zusammengesetzt. Für jeden Bildpunkt wird hierbei Licht bereitgestellt. Üblicherweise wird eine Hochdruckentladungslampe, insbesondere eine Xenon-Hochdruckentladungslampe, in einem Reflektor angeordnet, der typischerweise die Form eines Teilellipsoids hat. Die Lampe wird so angeordnet, dass sich der Punkt maximaler Leuchtdichte ungefähr im ersten Brennpunkt des Teilellipsoids befindet, welches das von der Lampe ausgesandte Licht zu seinem zweiten Brennpunkt hin fokussiert. Dort wird das Licht ausgekoppelt. Üblicherweise wird im Bereich des zweiten Brennpunkts ein sogenannter Integrator vorgesehen, welcher den Lichtstrahl homogen machen soll. Der Integrator ist typischerweise ein Quarzstab mit rechteckigem Querschnitt, in dem eine vielfache Totalreflexion des Lichts erfolgt, das dann homogenisiert aus dem Quarzstab austritt. Hinter dem Quarzstab ist z.B. eine Anordnung (Array) einer Vielzahl von kleinen Spiegeln bereitgestellt, welche einzeln verkippt werden können. Das Spiegelarray wird so angesteuert, dass gemäß einer Steuervorgabe die einzelnen Bildpunkte auf einer Leinwand beleuchtet werden oder nicht. Bei einem digitalen Videoprojektor muss daher gewährleistet sein, dass auf den Eingang des Integrators Licht mit extrem hoher Leuchtdichte gelangt. Konventionelle Xenon-Hochdruckentladungslampen haben eine nicht ausreichende maximale Leuchtdichte, um eine Digitalprojektion für klassisches Kino zu ermöglichen. Der Nutzlichtstrom auf der Kinoleinwand wird zu gering. Bisher behilft man sich damit, Xenon-Hochdruckentladungslampen mit besonders hoher Leistung bereitzustellen. Eine erhöhte Lampenleistung hat neben erhöhten Lampenkosten und einer geringeren Lebensdauer erhebliche thermische Probleme im Videoprojektor zur Folge. Es muss daher extrem hoher Aufwand für die Kühlung von Lampe und weiterer Projektorkomponenten betrieben werden, was mit Unkosten einher geht. Man hat auch bereits versucht, den Abstand zwischen den beiden Elektroden (Kathode und Anode) der Hochdruckentladungslampe besonders gering zu gestalten, um eine effektive Fokussierung des von dem entstehenden Lichtbogen ausgehenden Lichtes auf den Integrator zu erreichen. Bei den typischen Raumtemperatur-Fülldruckwerten des Entladungsgases (im vorliegenden Beispiel des Xenons) erniedrigt sich hierbei aber gleichzeitig die Brennspannung und damit auch die Leistung, so dass gleichzeitig Leuchtstärke verloren geht. Will man dies wiederum ausgleichen, müsste man den Strom erhöhen, was zu einem stärkeren Kathodenrückbrand führt. EP 1217644 zeigt ein Beispiel eines bekannten Hochdruckentladungslampe für digitale Projektionszwecke.

**Darstellung der Erfindung**

Die Aufgabe der vorliegenden Erfindung ist es, einen Weg aufzuzeigen, wie digitale Videoprojektoren für die Projektion von Kinofilmen verwendet werden können, wobei insbesondere aufgezeigt werden soll, wie die räumlich maximale Leuchtdichte der Hochdruckentladungslampe gesteigert werden kann.

Die Aufgabe wird durch ein Verfahren zum Bereitstellen einer Hochdruckentladungslampe mit den Schritten gemäß Patentanspruch 1, ein Verfahren zum Bereitstellen von Licht mittels einer Hochdruckentladungslampe gemäß Patentanspruch 6 und einen digitalen Videoprojektor gemäß Patentanspruch 8 gelöst.

Das erfindungsgemäße Verfahren zum Bereitstellen einer Hochdruckentladungslampe umfasst somit folgende Schritte:

- Festlegen einer Soll-Leistung der Hochdruckentladungslampe,

- Festlegen einer Obergrenze $I_{max}$ in Ampere für die Stromstärke des Stroms, mit dem die Hochdruckentladungslampe betrieben werden soll, zu der Soll-Leistung,

- Bauen einer Hochdruckentladungslampe, wobei in ein Entladungsgefäß eine Kathode und eine Anode eingebracht werden, wobei die Spitze der Kathode einen Krümmungsradius $R_K$ in mm hat und der Abstand der Kathode zur Anode im Betrieb (sogenannter Heißelektrodenabstand) $e_0$ in mm beträgt, und wobei ein Gas (insbesondere Xenon) mit einem Raumtemperaturfülldruck $P$ in bar in das Entladungsgefäß eingebracht wird (was hierbei geschlossen wird), wobei die Werte ($R_k$, $e_0$ und $P$) so gewählt sind, dass gewährleistet ist, dass

$$c = \sqrt{\frac{P \cdot I_{\max}^2}{e_0 \cdot R_K}} > 250 \qquad \left[ A \cdot \sqrt{\frac{bar}{mm^2}} \right]$$

und

für eine Soll-Leistung von 1500 bis 2500 W $I_{\max}$ < 105 A,
für eine Soll-Leistung von 2500 bis 3500 W $I_{\max}$ < 115 A,
für eine Soll-Leistung von 3500 bis 3800 W $I_{\max}$ < 130 A,
für eine Soll-Leistung von 3800 bis 5000 W $I_{\max}$ < 160 A,
für eine Soll-Leistung von 5000 bis 8000 W $I_{\max}$ < 180 A.

Die Erfindung basiert auf der Erkenntnis eines mathematischen Zusammenhangs zwischen den in der Formel verwendeten Größen, und zwar ist c ein Maß, das mit steigender Leuchtdichte der Hochdruckentladungslampe steigt, wenn diese mit $I_{\max}$ beaufschlagt wird. Weil die Hochdruckentladungslampe eine umso größere Leuchtdichte hat, je größer c ist, ist also bevorzugt c größer 275, besonders bevorzugt größer 300 und noch besonders bevorzugt größer 320. Während die Ansätze des Standes der Technik im Wesentlichen von bereits gebauten Hochdruckentladungslampen ausgingen und die Stromstärke passend hierzu gewählt haben, ist erfindungsgemäß gerade ermöglicht, dass zunächst die maximale Stromstärke gewählt wird und dennoch eine ausreichende Leuchtdichte gewährleistet ist, indem die anderen Größen $R_K$, $e_0$ und P passend gewählt werden. $I_{max}$ lässt sich insbesondere so wählen, dass sich die Hochdruckentladungslampe und damit der digitale Videoprojektor mit dieser Hochdruckentladungslampe nicht übermäßig erwärmt, dass also keine thermischen Probleme mehr auftreten. Gleichzeitig kann die Hochdruckentladungslampe verschleißarm betrieben werden.

Passend zu den maximalen Stromstärken lassen sich ohne Weiteres die Werte von $R_K$, $e_0$ und P so wählen, dass die obige Größe c größer als 250 und bevorzugt größer 275, 300 oder gar 320 ist. Beispielsweise lässt sich $R_K$ < 0,52 wählen, typischerweise kann bei einer Soll-Leistung von 7000 W $R_k$ = 0,5 mm sein. Bei Soll-Leistungen von kleiner als 5000 W kann $R_K$ < 0,42 mm sein, z.B. $R_K$ = 0,4 mm.

P lässt sich größer 10 bar wählen, bei Soll-Leistungen von kleiner als 5000 W sogar größer 13,8 bar z.B. typischerweise P = 14 bar bei Soll-Leistungen kleiner als 5000 W.

Der Kathodenabstand $e_0$ lässt sich in Abhängigkeit von der Soll-Leistung wählen: Für eine Soll-Leistung von 1500 bis 2000 W kann gelten $e_0$ < 2,8 mm, von 2500 bis 3500 W $e_0$ < 3,8 mm, von 3500 bis 3800 W $e_0$ < 4,2 mm, von 3800 bis 5000 W $e_0$ < 5,2 mm und von 5000 bis 8000 W $e_0$ < 7 mm. Es ist zu beachten, dass diese Werte für den Heißelektrodenabstand (Elektrodenabstand im Betrieb) gelten. Der Kaltelektrodenabstand ist um 1 mm größer (geschätzt), was beim Bau der Lampe berücksichtigt wird. nächst das Verfahren zum Bereitstellen einer Hochdruckentladungslampe wie oben beschrieben durchgeführt. Anschließend wird die Hochdruckentladungslampe mit einem Strom I in Ampere mit $I$ < $I_{max}$ beaufschlagt. Damit die maximale Leuchtdichte besonders hoch ist, gilt

$$c(I) = \sqrt{\frac{P \cdot I^2}{e_0 \cdot R_K}} > 250 \qquad \left[ A \cdot \sqrt{\frac{bar}{mm^2}} \right]$$

(wobei insbesondere besonders bevorzugt c(I) > 275, besonders bevorzugt, > 300, ganz besonders bevorzugt > 320, solange gewährleistet ist, dass $I$ < $I_{max}$).

Typischerweise wird man die Stromstärke I ein gutes Stück kleiner als $I_{\max}$ wählen. Beispielsweise kann bei den oben genannten Obergrenzen von $I_{\max}$ gelten:

Für eine Soll-Leistung von 1500 bis 2500 W: 85 A < $I$ < 97 A, für eine Soll-Leistung von 2500 bis 3500 W: 93 A < $I$ < 107 A, für eine Soll-Leistung von 3500 bis 3800 W: 103 A < $I$ < 117 A, für eine Soll-Leistung von 3800 bis 5000 W: 113 A < $I$ < 140 A, für eine Soll-Leistung von 5000 bis 8000 W: 130 A < $I$ < 165 A.

Der erfindungsgemäße digitale Videoprojektor weist eine nach dem erfindungsgemäßen Verfahren bereitgestellte Hochdruckentladungslampe auf, d.h. eine Hochdruckentladungslampe, bei der passend zu einer Soll-Leistung und einer maximalen Stromstärke die Parameter Krümmungsradius der Kathode, Elektrodenabstand und Raumtemperatur-Fülldruck des Gases so gewählt sind, dass die Leuchtstärke bei Betrieb der Hochdruckentladungslampe unter Soll-Leistung mit einem Strom unterhalb der maximalen Stromstärke ausreichend hoch ist. Der erfindungsgemäße digitale Videoprojektor weist eine Steuereinheit zum Steuern des Stroms auf, mit dem die Hochdruckentladungslampe beaufschlagt wird, wobei die Steuereinheit derartige Steuersignale abgibt, dass die Hochdruckentladungslampe im Betrieb stets mit einem Strom der Stromstärke I mit $I$ < $I_{max}$ beaufschlagt wird. Damit wird ein sicherer Betrieb des digitalen Videoprojektors gewährleistet, insbesondere gibt es keine Temperaturüberhöhungen.

## Kurze Beschreibung der Zeichnung

Im Folgenden soll die Erfindung anhand eines Ausführungsbeispiels näher erläutert werden. Es zeigt die einzige Figur:

den Aufbau einer Hochdruckentladungslampe und zusätzlich in schematischer Darstellung einige Bauteile eines digitalen Videoprojektors.

## Bevorzugte Ausführung der Erfindung

Eine Hochdruckentladungslampe 10 weist ein dicht abgeschlossenes Entladungsgefäß 12 auf, in dem sich ein Entladungsgas, vorliegend Xenon, bei Raumtemperatur (21°) unter einem Druck $P$ befindet. In dem Entladungsgefäß 12 befinden sich eine Kathode 14 und eine Anode 16. Die Kathode 14 hat eine Spitze 18 mit einem Krümmungsradius $R_K$. Der Abstand der Kathodenspitze 18 zur Anode 16 beträgt $e_0$.

Die Hochdruckentladungslampe 10 ist für eine vorbestimmte Soll-Leistung ausgelegt, zu dieser Soll-Leistung ist eine maximale Stromstärke $I_{max}$ festgelegt. Soll-Leistung und maximale Stromstärke sind so gewählt, dass ein Betrieb der Hochdruckentladungslampe gewährleistet ist, ohne dass es zu Temperaturüberhöhungen kommt. Die Größen $P$, $e_0$ und $R_x$ sind passend zu $I_{max}$ so gewählt, dass

$$c = \sqrt{\frac{P \cdot I_{max}^2}{e_0 \cdot R_K}} > 250 \quad \left[ A \cdot \sqrt{\frac{bar}{mm^2}} \right]$$

Die Größe $c$ ist ein Maß für die maximale Leuchtdichte der Lampe. Bei nicht digitalen Videoprojektoren erhält man bei Verwendung eines gleichartigen Maßes einen Wert von kleiner 250. Durch die erfindungsgemäße Bereitstellung der Hochdruckentladungslampe 10 wird daher eine maximale Leuchtdichte bereitstellbar, die in nicht digitalen Videoprojektoren nicht bereitstellbar ist.

Die Hochdruckentladungslampe 10 wird nun in einem schematisch dargestellten digitalen Videoprojektor 20 verwendet. Nicht gezeigt in der Figur ist ein Reflektor, in dem die Hochdruckentladungslampe 10 angeordnet ist und ein Integrator, auf den das von der Hochdruckentladungslampe 10 emittierte Licht fokussiert wird, bevor es einem Spiegelarray zugeführt wird.

Die Hochdruckentladungslampe 10 wird in dem digitalen Videoprojektor 20 von einer Stromquelle 22 gespeist. Diese Stromquelle soll die Hochdruckentladungslampe 10 nur mit Strömen versorgen, für deren Stromstärke $I$ gilt, dass $I < I$. Zu diesem Zweck wird die Stromquelle 12 von einer Steuereinheit 24 angesteuert, die den Wert der Stromstärke $I_{max}$ festlegt. Die Steuereinheit 24, welche als Mikrocontroller ausgebildet sein kann, gewährleistet, dass die Stromstärke $I_{max}$ nicht überschritten wird. Um eine besonders hohe im Raum maximale Leuchtdichte zu gewährleisten, kann die Steuereinheit 24 die Stromstärke I zudem derart festlegen, dass

$$c\,(I) = \sqrt{\frac{P \cdot I^2}{e_0 \cdot R_K}} > 250 \quad \left[ A \cdot \sqrt{\frac{bar}{mm^2}} \right]$$

Durch die geeignete Wahl der Parameter $e_0$, $R_K$ und $P$ passend zu $I_{max}$ ist eine besonders hohe Leuchtdichte gewährleistet, ohne dass die Soll-Leistung der Hochdruckentladungslampe 10 zu hoch bemessen sein muss. Durch Beachtung der oben genannten Formeln ist daher bei einer bestimmten Soll-Leistung eine besonders hohe maximale Leuchtdichte bereitstellbar. Umgekehrt ist auch bei Wunsch nach einer vorbestimmten maximalen Leuchtdichte eine Hochdruckentladungslampe 10 mit kleinerer Soll-Leistung als sonst verwendbar.

Die folgende Tabelle stellt für Soll-Leistungen der Hochdruckentladungslampe 10 dar, wie die Größen gewählt werden können (Stromsteuerbereich bis hin zu $I_{max}$, $e_0$, $R_K$ und $P$), und bei Beaufschlagung mit einem Strom $I < I_{max}$ erhaltenes c(I) und die Leuchtdichte:

| Leistung [W] | Stromsteuer-bereich [A] | $e_0$ [mm] | $R_K$ [mm] | Druck P [bar] | Strom I [A] | c(I) | maximale Leuchtdichte [kcd/cm^2] |
|---|---|---|---|---|---|---|---|
| 2000 | 70-100 | 2,6 | 0,4 | 14,5 | 90 | 336,1 | 739,0 |

| 3000 | 80-110 | 3,5 | 0,4 | 15 | 100 | 327,3 | 915,0 |
| 3600 | 90-120 | 3,9 | 0,4 | 15 | 110 | 341,1 | 1002,0 |
| 4200 | 80-150 | 4,6 | 0,4 | 14 | 120 | 331,0 | 911,0 |
| 7000 | 110-165 | 6,7 | 0,5 | 10,5 | 160 | 283,3 | 953,0 |

**Patentansprüche**

1. Verfahren zum Bereitstellen einer Hochdruckentladungslampe (10), mit den Schritten:

   - Festlegen einer Soll-Leistung der Hochdruckentladungslampe (10),
   - Festlegen einer Obergrenze $I_{max}$ in A für die Stromstärke des Stroms, mit dem die Hochdruckentladungslampe (10) betrieben werden soll, zu der Soll-Leistung
   - Bauen einer Hochdruckentladungslampe, wobei in ein Entladungsgefäß (12) eine Kathode (14) und eine Anode (16) eingebracht werden, wobei die Spitze (18) der Kathode (14) einen Krümmungsradius $R_K$ in mm hat und der Abstand der Kathode (14) zur Anode (16) im Betrieb $e_0$ in mm beträgt, und wobei ein Gas mit einem Raumtemperatur-Fülldruck $P$ in bar in das Entladungsgefäß (12) eingebracht wird, wobei gewährleistet ist, dass

$$c = \sqrt{\frac{P \cdot I_{max}^2}{e_0 \cdot R_K}} > 250 \quad \left[ A \cdot \sqrt{\frac{bar}{mm^2}} \right]$$

   und
   für eine festgelegte Soll-Leistung von 1500 bis 2500 W $I_{max}$ < 105 A,
   für eine festgelegte Soll-Leistung von 2500 bis 3500 W $I_{max}$ < 115 A,
   für eine festgelegte soll-Leistung von 3500 bis 3800 W $I_{max}$ < 130 A,
   für eine festgelegte Soll-Leistung von 3800 bis 5000 W $I_{max}$ < 160 A, und
   für eine festgelegte Soll-Leistung von 5000 bis 8000 W $I_{max}$ < 180 A.

2. Verfahren nach Anspruch 1,
   **dadurch gekennzeichnet, dass**
   die Hochdruckentladungslampe (10) so gebaut ist, dass c > 275, bevorzugt c > 300, besonders bevorzugt c > 320.

3. Verfahren nach einem der vorhergehenden Ansprüche,
   **dadurch gekennzeichnet, dass**
   $R_K$ < 0,52 mm, wobei bevorzugt für eine Soll-Leistung von kleiner als 5000 W $R_K$ < 0,42 mm.

4. Verfahren nach einem der vorhergehenden Ansprüche,
   **dadurch gekennzeichnet, dass**
   $P$ > 10 bar, für eine Soll-Leistung von kleiner als 5000 W bevorzugt $P$ > 13,8 bar.

5. Verfahren nach einem der vorhergehenden Ansprüche,
   **dadurch gekennzeichnet, dass**
   für eine festgelegte Soll-Leistung von 1500 bis 2500 W $e_0$ < 2,8 mm,
   für eine festgelegte Soll-Leistung von 2500 bis 3500 W $e_0$ < 3,8 mm,
   für eine festgelegte Soll-Leistung von 3500 bis 3800 W $e_0$ < 4,2 mm,
   für eine festgelegte Soll-Leistung von 3800 bis 5000 W $e_0$ < 5,2 mm, und
   für eine festgelegte Soll-Leistung von 5000 bis 8000 W $e_0$ < 7, 0 mm.

6. Verfahren zum Bereitstellen von Licht mittels einer Hochdruckentladungslampe (10), mit den Schritten:

   - Durchführen des Verfahrens nach einem der vorhergehenden Ansprüche,
   - Beaufschlagen der Hochdruckentladungslampe (10) mit einem Strom der Stromstärke $I$ in A wobei
   $I$ < $I_{max}$ und

$$c\,(I) = \sqrt{\frac{P \cdot I^2}{e_0 \cdot R_K}} > 250 \qquad \left[ A \cdot \sqrt{\frac{bar}{mm^2}} \right]$$

7. Verfahren nach Anspruch 6
**dadurch gekennzeichnet, dass**
für eine festgelegte Soll-Leistung von 1500 bis 2500 W: 85 A $< I <$ 97 A,
für eine festgelegte Soll-Leistung von 2500 bis 3500 W: 93 A $< I <$ 107 A,
für eine festgelegte Soll-Leistung von 3500 bis 3800 W: 103 A $< I <$ 117 A,
für eine festgelegte Soll-Leistung von 3800 bis 5000 W: 113 A $< I <$ 140 A, für eine festgelegte Soll-Leistung von 3800 bis 5000 W: 113 A $< I <$ 140 A, und
für eine festgelegte Soll-Leistung von 5000 bis 8000 W: 130 A $< I <$ 165 A.

8. Digitaler Videoprojektor (20) mit einer Hochdruckentladungslampe (10) und einer Steuereinheit (24) zum Steuern des Stroms, mit dem die Hochdruckentladungslampe (10) beaufschlagt wird,
wobei die Hochdruckentladungslampe (10) bei einer festgelegten Soll-Leistung und einer Stromstärke unterhalb einer festgelegten Obergrenze $I_{max}$ in A betreibbar ist und ein Entladungsgefäss (12) aufweist, in das eine Kathode (14) und eine Anode (16) eingebracht sind, wobei die Spitze (18) der Kathode (14) einen Krümmungsradius $R_K$ in mm hat und der Abstand der Kathode (14) zur Anode (16) im Betrieb $e_0$ in mm beträgt, und wobei ein Gas mit einem Raumtemperatur-Fülldruck P in bar in das Entladungsgefäss (12) eingebracht ist, wobei gewährleistet ist, dass

$$c = \sqrt{\frac{P \cdot I_{max}^2}{e_0 \cdot R_K}} > 250 \qquad \left[ A \cdot \sqrt{\frac{bar}{mm^2}} \right]$$

und
für eine festgelegte Soll-Leistung von 1500 bis 2500 W $I_{max} <$ 105 A,
für eine festgelegte Soll-Leistung von 2500 bis 3500 W $I_{max} <$ 115 A,
für eine festgelegte Soll-Leistung von 3500 bis 3800 W $I_{max} <$ 130 A,
für eine festgelegte Soll-Leistung von 3800 bis 5000 W $I_{max} <$ 160 A, und
für eine festgelegte Soll-Leistung von 5000 bis 8000 W $I_{max} <$ 180 A,
wobei die Steuereinheit (24) derart ausgelegt ist, dass sie im Betrieb derartige Steuersignale abgibt, dass die Hochdruckentladungslampe (10) stets mit einem Strom der Stromstärke $I$ mit $I < I_{max}$ beaufschlagt wird.

## Claims

1. Method for providing a high-pressure discharge lamp (10), having the following steps:

    - establishing a setpoint power of the high-pressure discharge lamp (10),
    - establishing an upper limit $I_{max}$ in A for the current intensity of the current with which the high-pressure discharge lamp (10) is intended to be operated with respect to the setpoint power,
    - constructing a high-pressure discharge lamp, wherein a cathode (14) and an anode (16) are introduced into a discharge vessel (12), the tip (18) of the cathode (14) having a radius of curvature $R_K$ in mm and the distance between the cathode (14) and the anode (16) during operation $e_0$ being in mm and wherein a gas with a room temperature fill pressure P in bar is introduced into the discharge vessel (12), with it being ensured that

$$c = \sqrt{\frac{P \cdot I_{max}^2}{e_0 \cdot R_K}} > 250 \qquad \left[ A \cdot \sqrt{\frac{bar}{mm^2}} \right]$$

and
$I_{max} <$ 105 A for an established setpoint power of 1500 to 2500 W,
$I_{max} <$ 115 A for an established setpoint power of 2500 to 3500 W,

$I_{max}$ < 130 A for an established setpoint power of 3500 to 3800 W,
$I_{max}$ < 160 A for an established setpoint power of 3800 to 5000 W, and
$I_{max}$ < 180 A for an established setpoint power of 5000 to 8000 W.

2. Method according to Claim 1,
**characterized in that**
the high-pressure discharge lamp (10) is constructed in such a way that
$c$ > 275, preferably c > 300 particularly preferably $c$ > 320.

3. Method according to one of the preceding claims **characterized in that**
$R_K$ < 0.52 mm, where, preferably, $R_K$ < 0.42 mm for a setpoint power of less than 5000.

4. Method according to one of the preceding claims, **characterized in that**
$P$ > 10 bar, where preferably, $P$ > 13.8 bar for a setpoint power of less than 5000 W.

5. Method according to one of the preceding claims, **characterized in that**
$e_0$ < 2.8 mm for an established setpoint power of 1500 to 2500 W,
$e_0$ < 3.8 mm for an established setpoint power of 2500 to 3500 W,
$e_0$ < 4.2 mm for an established setpoint power of 3500 to 3800 W,
$e_0$ < 5.2 mm for an established setpoint power of 3800, and to 5000 W and
$e_0$ < 7.0 mm for an established setpoint power of 5000 to 8000 W.

6. Method for providing light by means of a high-pressure discharge lamp (10), having the following steps:

   - implementing the method according to one of the preceding claims,
   - applying a current with the current intensity $I$ in A to the high-pressure discharge lamp (10), where
   $I < I_{max}$ and

$$c\,(I) = \sqrt{\frac{P \cdot I^2}{e_0 \cdot R_K}} > 250 \qquad \left[ A \cdot \sqrt{\frac{bar}{mm^2}} \right] \qquad .$$

7. Method according to Claim 6,
**characterized in that**
85 A < $I$ < 97 A for an established setpoint power of 1500 to 2500 W,
93 A < $I$ < 107 A for an established setpoint power of 2500 to 3500 W,
103 A < $I$ < 117 A for an established setpoint power of 3500 to 3800 $W$,
113 A < $I$ < 140 A for an established setpoint power of 3800 to 5000 W, and
130 A < $I$ < 165 A for an established setpoint power of 5000 to 8000 W.

8. Digital video projector (20) with a high-pressure discharge lamp (10) and with a control unit (24) for controlling the current which is applied to the high-pressure discharge lamp (10),
it being possible for the high-pressure discharge lamp (10) to be operated at an established setpoint power and a current intensity below an established upper limit $I_{max}$ in A and said high-pressure discharge lamp having a discharge vessel (12) into which a cathode (14) and an anode (16) are introduced, the tip (18) of the cathode (14) having a radius of curvature $R_K$ in mm, and the distance between the cathode (14) and the anode (16) during operation $e_0$ being in mm, and a gas with a room temperature fill pressure P in bar being introduced into the discharge vessel (12), with it being ensured that

$$c = \sqrt{\frac{P \cdot I_{max}^2}{e_0 \cdot R_K}} > 250 \qquad \left[ A \cdot \sqrt{\frac{bar}{mm^2}} \right] \qquad ,$$

and

$I_{max}$ < 105 A for an established setpoint power of 1500 to 2500 W,
$I_{max}$ < 115 A for an established setpoint power of 2500 to 3500 W,
$I_{max}$ < 130 A for an established setpoint power of 3500 to 3800 W,
$I_{max}$ < 160 A for an established setpoint power of 3800 to 5000 W, and
$I_{max}$ < 180 A for an established setpoint power of 5000 to 8000 W,
wherein the control unit (24) is designed in such a way that it emits control signals during operation such that a current with the current intensity $I$, where $I < I_{max}$, is always applied to the high-pressure discharge lamp (10).

**Revendications**

1.  Procédé pour produire une lampe à décharge haute pression (10), comportant les étapes suivantes :

    - détermination d'une puissance théorique de la lampe à décharge haute pression (10) ;
    - détermination, pour la puissance théorique, d'une limite supérieure $I_{max}$ en A de l'intensité du courant avec lequel il s'agit de faire fonctionner la lampe à décharge haute pression (10) ;
    - construction d'une lampe à décharge haute pression, une cathode (14) et une anode (16) étant introduites dans une enceinte de décharge (12), la pointe (18) de la cathode (14) ayant un rayon de courbure $R_K$ en mm et la distance entre la cathode (14) et l'anode (16) étant, pendant le fonctionnement, de $e_o$ en mm, et un gaz étant introduit dans l'enceinte de décharge (12) avec une pression de remplissage $P$ en bar à température ambiante, sachant qu'il est assuré que

    $$c = \sqrt{\frac{P \cdot I_{max}^2}{e_0 \cdot R_K}} > 250 \quad \left[ A \cdot \sqrt{\frac{bar}{mm^2}} \right]$$

    et que :

    pour une puissance théorique déterminée de 1 500 à 2 500 W, $I_{max}$ < 105 A ;
    pour une puissance théorique déterminée de 2 500 à 3 500 W, $I_{max}$ < 115 A ;
    pour une puissance théorique déterminée de 3 500 à 3 800 W, $I_{max}$ < 130 A ;
    pour une puissance théorique déterminée de 3 800 à 5 000 W, $I_{max}$ < 160 A ; et
    pour une puissance théorique déterminée de 5 000 à 8 000 W, $I_{max}$ < 180 A.

2.  Procédé selon la revendication 1, **caractérisé en ce que** la lampe à décharge haute pression (10) est construite de manière telle que $c > 275$, de manière préférentielle $c > 300$ et, de manière particulièrement préférentielle, $c > 320$.

3.  Procédé selon l'une des revendications précédentes, **caractérisé en ce que** $R_K$ < 0,52 mm, $R_K$ étant préférentiellement inférieur à 0,42 mm pour une puissance théorique inférieure à 5 000 W.

4.  Procédé selon l'une des revendications précédentes, **caractérisé en ce que** $P$ > 10 bars, $P$ étant préférentiellement supérieure à 13,8 bars pour une puissance théorique inférieure à 5 000 W.

5.  Procédé selon l'une des revendications précédentes, **caractérisé en ce que** :

    pour une puissance théorique déterminée de 1 500 à 2 500 W, $e_0$ < 2, 8 mm ;
    pour une puissance théorique déterminée de 2 500 à 3 500 W, $e_0$ < 3, 8 mm ;
    pour une puissance théorique déterminée de 3 500 à 3 800 W, $e_0$ < 4, 2 mm ;
    pour une puissance théorique déterminée de 3 800 à 5 000 W, $e_0$ < 5,2 mm ; et
    pour une puissance théorique déterminée de 5 000 à 8 000 W, $e_0$ < 7, 0 mm.

6.  Procédé pour produire de la lumière au moyen d'une lampe à décharge haute pression (10), comportant les étapes suivantes :

    - exécution du procédé selon l'une des revendications précédentes ;
    - alimentation de la lampe à décharge haute pression (10) avec un courant d'intensité $I$ en A, avec $I < I_{max}$ et

$$c\,(I) = \sqrt{\frac{P \cdot I^2}{e_o \cdot R_K}} > 250 \quad \left[ A \cdot \sqrt{\frac{bar}{mm^2}} \right]$$

**7.** Procédé selon la revendication 6, **caractérisé en ce que** :

pour une puissance théorique déterminée de 1 500 à 2 500 W : 85 A < $I$ < 97 A ;
pour une puissance théorique déterminée de 2 500 à 3 500 W : 93 A < $I$ < 107 A ;
pour une puissance théorique déterminée de 3 500 à 3 800 W : 103 A < $I$ < 117 A ;
pour une puissance théorique déterminée de 3 800 à 5 000 W : 113 A < $I$ < 140 A ; et
pour une puissance théorique déterminée de 5 000 à 8 000 W : 130 A < $I$ < 165 A.

**8.** Vidéoprojecteur numérique (20) avec une lampe à décharge haute pression (10) et une unité de commande (24) pour commander le courant avec lequel la lampe de décharge haute pression (10) est alimentée, la lampe à décharge haute pression (10) pouvant fonctionner avec une puissance théorique déterminée et une intensité de courant inférieure à une limite supérieure déterminée $I_{max}$ en A, et comportant une enceinte de décharge (12) dans laquelle sont introduites une cathode (14) et une anode (16), la pointe (18) de la cathode (14) ayant un rayon de courbure $R_K$ en mm et la distance entre la cathode (14) et l'anode (16) étant, pendant le fonctionnement, de $e_o$ en mm, et un gaz étant introduit dans l'enceinte de décharge (12) avec une pression de remplissage P à température ambiante, sachant qu'il est assuré que

$$c = \sqrt{\frac{P \cdot I_{max}^2}{e_o \cdot R_K}} > 250 \quad \left[ A \cdot \sqrt{\frac{bar}{mm^2}} \right]$$

et que :

pour une puissance théorique déterminée de 1 500 à 2 500 W, $I_{max}$ < 105 A ;
pour une puissance théorique déterminée de 2 500 à 3 500 W, $I_{max}$ < 115 A ;
pour une puissance théorique déterminée de 3 500 à 3 800 W, $I_{max}$ < 130 A ;
pour une puissance théorique déterminée de 3 800 à 5 000 W, $I_{max}$ < 160 A ; et
pour une puissance théorique déterminée de 5 000 à 8 000 W, $I_{max}$ < 180 A,
l'unité de commande (24) étant conçue de manière telle qu'elle *d*élivre, pendant le fonctionnement, des signaux de commande tels que la lampe à décharge haute pression (10) est continuellement alimentée avec un courant d'intensité $I$ avec $I < I_{max}$.

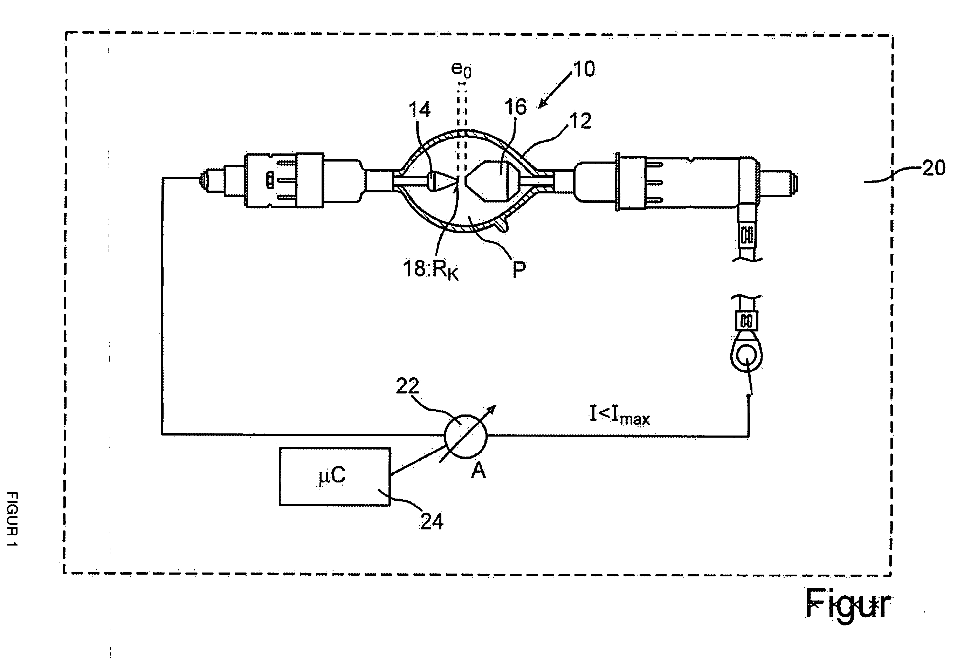

FIGUR 1

Figur

EP 2 257 966 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1217644 A